(19) **Europäisches Patentamt**

**European Patent Office**

**Office européen des brevets**

(11) Veröffentlichungsnummer: **0 258 746**
**A2**

(12) **EUROPÄISCHE PATENTANMELDUNG**

(21) Anmeldenummer: **87112072.1**

(22) Anmeldetag: **20.08.87**

(51) Int. Cl.⁴: **C08G 77/42** , C08F 283/12 , C08L 83/10

(30) Priorität: **02.09.86 DE 3629763**

(43) Veröffentlichungstag der Anmeldung:
**09.03.88 Patentblatt 88/10**

(84) Benannte Vertragsstaaten:
**DE FR GB IT NL**

(71) Anmelder: **BAYER AG**

**D-5090 Leverkusen(DE)**

(72) Erfinder: **Lindner, Christian, Dr.**
**Riehler Strasse 200**
**D-5000 Koeln 60(DE)**
Erfinder: **Kress, Hans-Jürgen, Dr.**
**Mobay Corp. Plastics and Rubber Div. Mobay**
**Road**
**Pittsburgh, PA 15205(US)**
Erfinder: **Eichenauer, Herbert, Dr.**
**Goethestrasse 71**
**D-4047 Dormagen(DE)**
Erfinder: **Ott, Karl-Heinz, Dr.**
**Paul-Klee-Strasse 54**
**D-5090 Leverkusen(DE)**
Erfinder: **Grape, Wolfgang, Dr.**
**Roggendorfstrasse 51**
**D-5000 Koeln 80(DE)**

(54) **Kerbschlagzähe Silikonkautschukpropfpolymerisate.**

㊌ Thermoplastische Pfropfpolymerisate aus:

I. 10 - 80 Gew.-Teilen eines wenigstens teilvernetzten, teilchenförmigen Siliconkautschukes, enthaltend im wesentlichen chemisch eingebaute Gruppen der allgemeinen Formel

a) $R_2SiO$, $RSiO_{3/2}$, $R_2R^3SiO_{1/2}$, $SiO_{4/2}$ sowie

b) $R^1CH = CH-(R^2)$-und

c) H-S-

wobei

R = einwertiger, gesättigter Kohlenwasserstoff-Rest, gegebenenfalls durch SH, Halogen, $C_1$-$C_6$-Oxyalkyl substituiert

$R^1$ = H, $C_1$-$C_6$-Alkyl,

$R^2$ = Einfachbindung, $C_1$-$C_4$-Alkylen,

$R^3$ = R oder OH als Pfropfgrundlage und

II. 90 - 20 Gew.-Teilen eines Polymerisates aus wenigstens einem $\alpha,\beta$-ungesättigten, olefinischen, polymerisierbaren Monomeren als Pfropfauflage.

EP 0 258 746 A2

## Kerbschlagzähe Silikonkautschukpfropfpolymerisate

Die Erfindung betrifft Pfropfpolymerisate auf spezielle Siliconkautschuke und ihre Verwendung als thermoplastische Formmasse.

Pfropfpolymerisate auf Silikonkautschuke sind grundsätzlich bekannt (vgl. DE-OS 2 539 572 und DE-OS 2 421 288).

Gegenstand der Erfindung sind thermoplastische Pfropfpolymerisate aus:

I. 10 - 80, insbesondere 30 - 70 Gew.-Teilen eines wenigstens teilvernetzten, teilchenförmigen Siliconkautschukes, enthaltend im wesentlichen chemisch eingebaute Gruppen der allgemeinen Formel

a) $R_2SiO$, $RSiO_{3/2}$, $R_2R^3SiO_{1/2}$, $SiO_{4/2}$ sowie

b) $R^1CH=CH-(R^2)$-und

c) H-S-

mit R = einwertiger, gesättigter Kohlenwasserstoff-Rest, insbesondere $CH_3$, Phenyl, $C_2H_5$, gegebenenfalls durch SH, Halogen, $C_1$-$C_6$-Oxyalkyl-substituiert

$R^1$ = H, $C_1$-$C_6$-Alkyl, insbesondere H, $CH_3$

$R^2$ = Einfachbindung, $C_1$-$C_4$-Alkylen, insbesondere $-CH_2-$, $-C_2H_4-$, Einfachbindung,

$R^3$ = R oder OH der Pfropfgrundlage und

II. 90 - 20, insbesondere 70 - 30 Gew.-Teile eines Polymerisates aus wenigstens einem $\alpha,\beta$-ungesättigten, olefinischen, polymerisierbaren Monomeren als Pfropfauflage.

Der Siliconkautschuk als Pfropf-Grundlage zur Herstellung des Pfropfcopolymeren enthält Einheiten der allgemeinen Formeln

a) $R_2SiO$, $RSiO_{3/2}$, $R_2R^3SiO_{1/2}$, $SiO_{4/2}$ sowie

b) $R^1CH=CH-(R^2)$-und

c) H-S-.

Die Mengen der einzelnen Siloxaneinheiten sind dabei so bemessen, daß auf 100 Mol-Einheiten der Formel $R_2SiO$ 0 bis 0,5 Mol Einheiten $R_2R^3SiO_{1/2}$, 0 bis 10 Mol Einheiten der Formel $RSiO_{3/2}$ und 0 bis 3 Mol Einheiten der Formel $SiO_{4/2}$ vorhanden sind.

In bevorzugten Kautschuken sind mindestens 80 % aller Reste R $CH_3$-Gruppen.

In den Gruppen $R_2R^3SiO_{1/2}$ -den Endgruppen des Siliconkautschuks - kann einer der drei organischen Reste eine Hydroxylgruppe darstellen. Besonders bevorzugte Endgruppe ist die Dimethylhydroxysiloxyeinheit.

Die Silikonkautschuke enthalten zusätzlich gleichzeitig die Gruppen b) und c) in einer Gesamtmenge von 2 bis 10 Mol %, bezogen auf die Gesamtheit aller Reste R. Das molare Verhältnis von b) zu c) ist dabei von 3 : 1 bis 1 : 3, vorzugsweise 2 : 1 bis 1 : 2.

Sind nur Reste (b) oder nur Reste (c) in dem Silikonkautschuk eingebaut vorhanden, so kommt es bei der weiteren Verarbeitung (von aus den Kautschuken hergestellten Pfropfpolymerisaten zu thermoplastischen Formkörpern) zu Unverträglichkeit, die sich z. B. in unzureichender Qualität der Oberflächen äußert.

Besonders geeignete Gruppen b) sind Vinyl-und Allyl-Gruppen. Gruppe c) ist -SH, die vorzugsweise über Mercaptoalkyl-, insbesondere Mercaptopropyl-eingebaut ist.

Die Silikonkautschuke sind teilchenförmig und besitzen mittlere Teilchendurchmesser ($d_{50}$-Werte) von 0,09 -1 $\mu$m, insb. 0,09 - 0,4 $\mu$m; sie sind wenigstens teilvernetzt, d. h. sie besitzen Gelgehalte von größer 50 Gew.%, besonders größer 70 Gew.-%, besonders bevorzugt im Bereich von 73 - 98 Gew.-%.

Gegebenenfalls kann der Siliconkautschuk (I) auch Füllstoffe enthalten. Insbesondere geeignet sind verstärkenden Füllstoffe, besonders bevorzugt sind Kieselsäuren, die pyrogen erzeugt oder gefällt sein können. Als Kieselsäuren kommen Materialien mit einer Oberfläche zwischen 50 und 300 m²/g (nach BET) in Betracht. Bezüglich des Zugabemodus ist besonders bevorzugt, die Kieselsäure als wäßrige Dispersion (Kieselsol) zugegeben. Die Menge an $SiO_2$ beträgt zwischen 0 und 30 Teile, bezogen auf 100 Teile Siliconpolymer.

Die in den erfindungsgemäßen Pfropfpolymerisaten enthaltenden Polymerisate (Pfropfauflagen) (II) leiten sich von $\alpha$, $\beta$-ungesättigten, polymerisierbaren Monomeren ab, vorzugsweise von Vinylmonomeren. Geeignete Monomere sind z. B. Styrol, $\alpha$-Methylstyrol, p-Methylstyrol, Halogenstyrol, Acrylnitril, Methacrylnitril, Vinylchlorid, Maleinimide, Maleinsäurederivate, Vinylacetat, Vinylpropionat, Acrylsäurealkylester (mit bis zu 10 C-Atomen im Alkoholteil), Vinylether, konjugierte Diene, wie Butadien, Chloropren; besonders bevorzugt sind Styrol, Acrylnitril, Methacrylate, Acrylate und Vinylhalogenide.

Die Polymerisate (Pfropfauflagen) II können Homopolymere oder Co-Polymerisate aus wenigstens zwei der genannten Monomeren darstellen.

Die Polymerisate (Pfropfauflage) II liegen wenigstens teilweise auf dem Silikonkautschuk aufgepfropft vor. In besonders bevorzugten Pfropfpolymerisaten ist mehr als 50 Gew.-% der Pfropfauflage tatsächlich aufgepfropft.

Die erfindungsgemäßen Pfropfpolymerisate sind wie folgt herstellbar; zunächst wird in einer ersten Stufe durch Emulsionspolymerisation eines Silikonoligomeren der Silikonkautschuk hergestellt:

Die Herstellung einer Emulsion eines langkettigen OH-terminierten Silikonöls durch Emulsionspolymerisation ist z. B. in US-PS 2 891 910 und in GB-PS 1 024 024 beschrieben. Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgiermittelkonzentration gering gehalten werden, und man hat nach Fertigstellung der Emulsion wenig störenden Fremdmoleküle aus dem Katalysator in dem fertigen Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätz lich andere Emulgiermittel als Co-Emulgatoren einzusetzen.

Derartige Co-Emulgatoren können nichtionisch oder anionisch sein. Als anionische Co-Emulgatoren kommen insbesondere Salz der obengenannten n-Alkyl-oder Alkylbenzolsulfonsäuren in Frage. Nichtionische Co-Emulgatoren sind Polyoxyethylenderivate von Fettalkoholen, Fettsäuren und dergl.. Beispiele für derartige Emulgiermittel sind POE (3)-Laurylalkohol, POE (20)-Oleylalkohol, POE (7)-Nonylphenol oder POE (10)-Stearat (die Schreibweise POE (3)-Laurylalkohol bedeutet, daß an ein Molekül Laurylalkohol 3 Einheiten Ethylenoxid addiert worden sind, wobei die Zahl 3 einen Mittelwert darstellt, POE (7)-Nonylphenol und POE-(10)-Stearat sind analog definiert).

Im allgemeinen sind Siliconöle, die durch Emulsionspolymerisation in Anwesenheit von nichtionischen Co-Emulgatoren entstanden sind, von niedrigerem Molekulargewicht als solche, bei denen kein Co-Emulgator verwendet wurde. Das Molekulargewicht des bei der Emulsionspolymerisation entstehenden OH-terminierten Siliconöls kann z. B. weit über die Temperatur bei der Gleichgewichtsbildung zwischen Siloxan, Wasser und dem durch Ringöffnung des Siloxans zunächst gebildeten Silanöls eingestellt werden. Für Einzelheiten zum Zusammenhang zwischen Temperatur und Molekulargewicht vgl. D. R. Weyenberg et. al, J.Polymer Sci. Part C, 27 pp 27-34 (1969).

Gruppen b) und c) können in das bevorzugte Siliconpolymer durch Arbeiten in Anwesenheit geeigneter Siloxanoligomerer eingbaut werden. Geeignete Ausgangsoligomere sind z. B. Tetramethyltetravinylcyclotetrasiloxan oder γ-Mercaptoropylmethyldimethoxysilan oder dessen Hydrolysat.

Diese funktionellen Oligomeren werden dem Basisoligomer Octamethylcyclotetrasiloxan in den gewünschten Mengen beigefügt.

Analog kann auch der Einbau längerkettiger Alkylreste R, wie Ethyl, Propyl oder der Einbau von Phenylgruppen erreicht werden.

Die Siliconpfropfgrundlage muß wenigstens teilweise vernetzt sein.

Verzweigungen oder Vernetzungen können eingebaut werden beispielsweise durch Zugabe von Tetraethoxysilan oder eines Silans der allgemeinen Formel $RSoX_3$, wobei X eine hydrolysierbare Gruppe, insbesondere den Alkoxyrest darstellt. R hat die oben angegebene Bedeutung. Bevorzugt ist R = Methyl oder Phenyl. Besonders bevorzugt sind neben Tetraethoxysilan Methyltrimethoxysilan und Phenyltrimethoxysilan. Die Silikonkautschuke können auch zusätzlich anorganische Füllstoffe enthalten z. B. $SiO_2$, Talkum.

Anschließend werden die die Pfropfauflage bildenden Monomeren in Anwesenheit des Silikonkautschuks radikalisch pfropfpolymerisiert, insbesondere im Temperaturbereich von 40 - 90°C. Die Pfropfpolymerisation kann in Suspension, Dispersion oder Emulsion durchgeführt werden. Bevorzugt ist die Emulsionspfropfpolymerisation (kontinuierlich oder diskontinuierlich). Diese Pfropfpolymerisation wird unter Einsatz von Radikalinitiatoren durchgeführt (aus der Gruppe der Peroxide, Azoverbindungen, Hydroperoxide, Persulfate, Perphosphate) sowie auch gegebenenfalls unter Einsatz von Emulgatoren des anionischen Typs wie Carboniumsalze, Sulfonsäuresalze oder organische Sulfate. Dabie bilden sich Pfropfpolymerisate mit hohen Pfropfausbeuten, d. h. ein hoher Gewichts-Anteil des sich bildenden Auflage-Polymerisats (II) wird auf den Silikonkautschuk chemisch aufgeprfopft. Der Einsatz der speziell strukturierten Kautschukgrundlage (I) macht z. B. besondere Verfahrensmaßnahmen (die die hohe Pfropfung ermöglichen) überflüssig.

Die so hergestellten Pfropfpolymerisate können nach bekannten Verfahren aufgearbeitet werden, z. B. durch Koagulation der Latices mit Elektrolyten (Salze, Säuren oder Gemische davon) und anschließende Reinigung und Trocknung.

Die erfindungsgemäßen Pfropfpolymerisate zeichnen sich durch eine überraschend gute Kombination technisch relevanter Kunststoffeigenschaften als Thermoplast aus: Als solche Eigenschaften sind zu nennen: Alterungsstabilität, Thermostabilität, besonders bei Verarbeitung zu Formkörpern, Thermoplastformkörperoberflächenbeschaffenheit, Verarbeitbarkeit, Tieftemperaturzähigkeit, Bruchfestigkeit sowie auch akzeptable Wirtschaftlichkeit.

Das erfindungsgemäße Pfropfpolymerisat kann direkt als theremoplastische Formmasse verwendet werden, wenn dessen Kautschukgehalt nicht höher als 40 Gew.-% liegt. Bei höheren Kautschukgehalten kann ein starres Harz zugemischt werden. Starre Harze sind vorzugsweise Styrol /Methylmethacrylat / Acrylnitril-Terpolymere, Styrol-bzw. α-Methylstyrol / Acrylnitril-Copolymere, Styrol - Acrylnitril / Acrylester-Terpolymere, Methylmethacrylat-Homo-bzw. Copolymere, Styrol / Maleinsäureanhydrid-Copolymere, Styrol / Methylmethacrylat / Maleinsäureanhydrid Terpolymere oder aus diesen Harzkomponenten ausgewählte Mischungen.

Man kann die erfindungsgemäßen Pfropfpolymerisate auch mit bekannten Kautschuk-modifizierten Kunststoffen vermischen, z. B. mit ABS-Kunststoffen oder mit Acrylatkautschuk-modifizierten Harzen ("ASA-Harzen"). Man kann so die Alterungsbeständigkeit und elektrostatischen Eigenschaften von ABS ohne Beeinträchtigung der mechanischen Eigenschaften verbessern oder die mechanischen Eigenschaften von ASA-Harzen und die Oberflächenbeschaffenheit von Formkörpern daraus.

Die erfindungsgemäßen Formmassen können Farbstoffe und Pigmente, Stabilisatoren gegen Licht-und Wärmeeinwirkung, Weichmacher, Schaummittel und organische oder anorganische Füllstoffe in Körnchen-, Pulver-oder Faserform enthalten. Sie können beispielsweise durch Spritzguß oder durch Strangpressen verformt werden und sind für Formkörper jeder Art geeignet, die witterungsbeständig und schlagfest sein müssen. Beispielsweise können sie als Außenschicht eines Laminats aus mehreren verschiedenen Polymeren dienen.

### Beispiele

### 1. Herstellung von Silikonemulsionen

1.1 38,4 Gew.-Tl. Octamethylcyclotetrasiloxan, 1,2 Gew.-Tl. Tetramethyltetravinylcyclotetrasiloxan und 1 Gew.-Tl. γ-Mercaptopropylmethyldimethoxysilan werden miteinander verrührt: 0,5 Gew.-Tl. Dodecylbenzolsulfonsäure werden anschließend in 58,4 Gew.-Tl. Wasser innerhalb 1 Stunde zugegeben. Dabei wird intensiv gerührt. Die Voremulsion wird mit Hilfe einer Hochdruckemulgiermaschine 2 x bei 200 bar homogenisiert. Man gibt weitere 0,5 Gew.-T. Dodecylbenzolsulfonsäure hinzu.

Die Emulsion wird 2 Stunden bei 85°C und anschließend 36 Stunden bei Raumtemperatur gerührt. Neutralisiert wird mit Hilfe von 5 n-NaOH. Es resultiert eine stabile Emulsion mit einem Feststoffgehalt von ca. 36 %. Das Polymer besitzt einen Gelgehalt von 82 Gew.-%, gemessen in Toluol, die mittlere Teilchengröße ($d_{50}$) beträgt 300 nm.

1.2 Eine weitere Emulsion wird wie unter 1. beschrieben hergestellt, die zusätzlich zu den Bestandteilen des Beispiels 1.1 0,2 Gew.-Tl. Tetraethoxysilan enthält.

### 2. Erfindungsgemäße Pfropfpolymerisate

2.1 In einem Reaktor werden vorgelegt:
2107 Gew.-Teile Latex 1.1.
1073 Gew.-Teile Wasser

Nach Initiierung mittels einer Lösung von 7,5 Gew.-Teilen Kaliumperoxodisulfat in 195 Gew.-Teilen Wasser bei 65°C werden folgende Lösungen in den Reaktor innerhalb von 4 Stunden gleichmäßig eingespeist:
Lösung 1:    540 Gew.-Teile Styrol
210 Gew.-Teile Acrylnitril
Lösung 2:    375 Gew.-Teile Wasser
15 Gew.-Teile Natriumsalze von $C_{14}$-$C_{18}$-Alkylsulfonsäuren.

Anschließend wird innerhalb von 4 Stunden bei 65°C auspolymerisiert. Es resultiert ein Latex mit einem Feststoffgehalt von ca. 33 Gew.-%. Nach Koagulation mit einer wäßrigen Magnesiumchlorid-Essigsäure-Lösung, Filtration und Trocknung in Vakuum wird das Pfropfpolymerisat in Form eines weißen Pulvers erhalten.

4

2.2 Analog der unter 2.1 beschriebenen Vorschrift wird ein Pfropfpolymerisat hergestellt, wobei als Kautschukgrundlage der Latex 1.2 eingesetzt wird. Es resultiert ein Pfropflatex, der wie unter 2.1 beschrieben aufgearbeitet wird.

## 3. Thermoplasteigenschaften

Die in der Tabelle 1 angegebenen Formmassen werden hergestellt durch Compoundierung auf einem Banbury-Mischer BR (Pomini-Farrel) unter folgenden Mischbedingungen:

Massetemperatur:     190 - 225°C
Mischzeiten:     1,5 - 2 Min.
Cycluszeiten:     1 - 4 Min.

Das Mischgut fällt aus dem Banbury-Mischer auf einen Zweiwalzenstuhl (Walze 1 T = 160°C, Walze 2 T = 150°C), wird in Form eines Bandes abgenommen und nach Abkühlung granuliert.

Aus dem Granulat werden durch Spritzguß bei 240°C Normkleinstäbe hergestellt und diese nach DIN-Methoden untersucht.

Als Vergleichssubstanz wird ein ABS-Pfropfpolymerisat V aus 50 Gew.-% grobteiligem hochvernetztem Polybutadien und 50 Gew.-% SAN-Polymerisat mit einem Styrol/Acrylnitril-Gew.-Verhältnis von 72:28 mit einer mittleren Teilchengröße ($d_{50}$) von 400 nm eingesetzt.

Die Kerbschlagzähigkeit wurde bei Raumtemperatur ($a_k^{RT}$) und bei -40°C ($a_k^{-40°C}$) nach DIN 53 453 (Einheit: kJ/m$^2$) bzw. nach ASTM 256-56 ISO/R 180 (Izod$^{RT}$, Izod $^{-40°C}$, Einheit: J/m), die Kugeldruckhärte ($H_c$) nach DIN 53456 (Einheit: N/mm$^2$) und die Wärmeformbeständigkeit (Vicat B) nach DIN 53460 (Einheit: °C) bestimmt.

Tabelle 1: Thermoplastische Mischungen

| Beispiel | Pfropfpolymer | (Gew.-Teile) | Harz | (Gew.-Teile) | Gleitmittel |
|---|---|---|---|---|---|
| 3.1 | 2.1 | (20) | SAN | (80) | 2 PETS |
| 3.2 | 2.1 | (30) | SAN | (70) | 2 PETS |
| 3.3 | 2.1 | (40) | SAN | (60) | 2 PETS |
| 3.4 | 2.1 | (40) | SAN | (50) | 2 PETS |
| 3.5 | 2.1 | (50) | SAN | (80) | 2 PETS |
| 3.6 | V | (30) | SAN | (70) | 2 PETS |
| 3.7 | V | (40) | SAN | (60) | 2 PETS |
| 3.8 | V | (50) | SAN | (50) | 2 PETS |
| 3.9 | 2.2 | (35) | SAN | (65) | 2 AC |
| 3.10 | 2.2 | (50) | SAN | (50) | 2 AC |
| 3.11 | V | (35) | SAN | (65) | 2 AC |
| 3.12 | V | (50) | SAN | (50) | 2 AC |

SAN = Copolymer aus 70 Gew.-% Styrol und 30 Gew.-% Acrylnitril und einer Grenzviskosität von $[\eta]$ = 0,72 dl/g (gemessen in Dimethylformamid bei $20^0$ C)

PETS= Pentoerythrittetrastearat

AC = Bisstearylamid des Ethylendiamins

0 258 746

Tabelle 2: Eigenschaften der Formmassen aus Tabelle 1

| Produkt | $a_K$ RT | $a_K$ -40°C | Izod RT | Izod -40°C | Hc | Vicat B |
|---------|----------|-------------|---------|------------|-----|---------|
| 3.1 | 11,2 | 4,0 | - | - | 123 | 102 |
| 3.2 | 16,6 | 8,2 | - | - | 103 | 100 |
| 3.3 | 18,4 | 10,9 | - | - | 97 | 99 |
| 3.4 | 19,9 | 12,9 | - | - | 69 | 93 |
| 3.5 | 10,5 | 3,0 | - | - | 130 | 101 |
| 3.6 | 14,4 | 7,2 | - | - | 108 | 99 |
| 3.7 | 14,9 | 11,2 | - | - | 90 | 98 |
| 3.8 | 15,8 | 13,1 | - | - | 74 | 95 |
| 3.9 | - | - | 374 | 164 | 101 | 100 |
| 3.10 | - | - | 501 | 276 | 75 | 96 |
| 3.11 | - | - | 301 | 101 | 98 | 98 |
| 3.12 | - | - | 411 | 220 | 75 | 93 |

**Ansprüche**

1. Thermoplastische Pfropfpolymerisate aus:

I. 10 - 80 Gew.-Teilen eines wenigstens teilvernetzten, teilchenförmigen Siliconkautschukes, enthaltend im wesentlichen chemisch eingebaute Gruppen der allgemeinen Formel

a) $R_2SiO$, $RSiO_{3/2}$, $R_2R^3SiO_{1/2}$, $SiO_{4/2}$ sowie

b) $R^1CH = CH-(R^2)-$ und

c) H-S-

wobei

R = einwertiger, gesättigter Kohlenwasserstoff-Rest, gegebenenfalls durch SH, Halogen, $C_1$-$C_8$-Oxyalkyl substituiert

7

R$^1$ = H, C$_1$-C$_6$-Alkyl,

R$^2$ = Einfachbindung, C$_1$-C$_4$-Alkylen,

R$^3$ = R oder OH als Pfropfgrundlage und

II. 90 - 20 Gew.-Teilen eines Polymerisates aus wenigstens einem $\alpha,\beta$-ungesättigten, olefinischen, polymerisierbaren Monomeren als Pfropfauflage.

2. Verwendung der teilchenförmigen Pfropfpolymerisate gemäß Anspruch 1, gegebenenfalls in Abmischung mit spröden, thermoplastichen Vinylharzen, als thermoplastische Formmasse.